# EUROPÄISCHE PATENTANMELDUNG

(11) **EP 2 253 932 A1**
(43) Veröffentlichungstag der Anmeldung: **24.11.2010**
(21) Anmeldenummer: 09160615.2
(22) Anmeldetag: 19.05.2009
(51) Int. Cl.: G01C 11/00, G02B 27/00, G03B 9/00, H04N 7/18

(54) **Luftbildkamera-System und Verfahren zum Korrigieren von Verzerrungen in einer Luftbildaufnahme**

(71) Anmelder: Leica Geosystems AG, 9435 Heerbrugg (CH); Novatel, Inc., Calgary, Alberta T2E 8S5 (CA)
(72) Erfinder: Ferrano, Gert, CH-9444 Diepoldsau (CH); Walser, Bernd, CH-9435 Heerbrugg (CH); Morin, Kristian, Calgary Alberta T2E 8S5 (CA)
(74) Vertreter: Kaminski Harmann

(57) **Zusammenfassung**

Die Erfindung betrifft ein Verfahren zum Korrigieren einer durch eine Flugvorwärtsbewegung verursachten Verzerrung in einer Luftbildaufnahme (1), die mit einer Luftbildkamera (2) von einem Flugobjekt (3) aus aufgenommen wird.

Dabei wird die Luftbildaufnahme (1) durch einen eine Vielzahl von photosensitiven Pixel (5) aufweisenden Flächensensor (4) der Luftbildkamera (2) erfasst, dessen Sensor-Linien (6), insbesondere Zeilen, anhand eines sich über ein projiziertes Bild verschiebenden Schlitzblendenverschluss (7) zu unterschiedlichen, aufeinander folgenden Belichtungszeitpunkten belichtet werden, sodass die einzelnen Sensor-Linien (6) jeweils einen Geländestreifen (9) des überflogenen Geländes (8) zu den unterschiedlichen Belichtungszeitpunkten erfassen.

Erfindungsgemäss werden den einzelnen Sensor-Linien (6) jeweils eine, insbesondere zum Belichtungszeitpunkt aktuelle, relative Flughöhe über dem durch die jeweilige Sensor-Linie erfassten Geländestreifen (9) zugeordnet. Zudem werden für die einzelnen Sensor-Linien (6) separat jeweils ein Kompensationsfaktor bestimmt, der von einer Fluggeschwindigkeit des Flugobjekts (3), einer Brennweite der Luftbildkamera (2) sowie der der jeweiligen Sensor-Linie zugeordneten relativen Flughöhe abhängt, und die Verzerrung in der Luftbildaufnahme (1) linienweise anhand des jeweiligen Kompensationsfaktors korrigiert.

## Beschreibung

Die Erfindung betrifft ein Verfahren zum Korrigieren einer durch eine Flugvorwärtsbewegung verursachten Verzerrung in einer Luftbildaufnahme, die mit einer Luftbildkamera von einem Flugobjekt aus aufgenommen wird, nach dem Oberbegriff des Anspruchs 1, ein Verfahren Aufnehmen von Luftbildern nach dem Oberbegriff des Anspruchs 8, ein Luftbildkamera-System nach dem Oberbegriff des Anspruchs 9 und ein Computerprogrammprodukt nach Anspruch 12.

Luftbildkameras mit photosensitiven elektronischen, meist hochauflösenden Flächensensoren sind seit Längerem bekannt und werden zur Aufnahme von Luftbildern eingesetzt, die z.B. von einem sich in bestimmter Flughöhe mit bestimmter Fluggeschwindigkeit bewegenden Flugobjekt aus erfasst werden. Typischerweise weisen bekannte Luftbildkameras dabei einen zentralen, globalen Blendenverschluss auf.

Eine solche Luftbildkamera ist beispielsweise in der Veröffentlichungsschrift DE 199 32 065 A1 beschrieben.

Um eine scharfe Abbildung zu erreichen, werden die lichtempfindlichen Pixel (5) des Flächensensors, der insbesondere aus einer Vielzahl an CCD- oder CMOS-Zeilen besteht, mit der Bildebene des Objektivs in Übereinstimmung gebracht. In Abhängigkeit von Brennweite und Öffnungsverhältnis des verwendeten Objektivs sind nur kleine Lageabweichungen zwischen der Bildebene und der Fokalebene - d.h. der Oberfläche des Flächensensors - zugelassen.

Aus der Sportphotographie ist bekannt, dass - um beispielsweise einen Läufer scharf abzubilden - die Kamera während der Belichtungszeit entsprechend der Bewegung des Läufers mitzuschwenken ist. Ansonsten erhält man ein verschmiertes Bild des Läufers, das eine so genannte Bewegungsunschärfe aufweist.

Das gleiche Problem tritt auch bei optoelektronischen Erkundungssystemen auf, die von Flugzeugen aus eingesetzt werden. Während der Belichtungszeit bzw. Integrationszeit für z.B. ein bestimmtes, im Erfassungsbereich der Luftbildkamera liegendes Planquadrat auf der Erdoberfläche ergibt sich eine Verschiebung des aufzunehmenden Planquadrates bezüglich der im fliegenden Objekt angeordneten Luftbildkamera. Dieser Effekt führt dann bei derartigen Aufnahmen ebenfalls zu einer Verwaschung bzw. Bewegungsunschärfe der aufgenommenen Luftbilder.

Aus der US 5,460,341 ist eine Luftbildkamera bekannt, wobei mittels linearer Stelleinrichtungen die Fokalebene zur Kompensation der Fokusdrift in verschiedenen Richtungen verstellbar ist. Die Luftbildkamera umfasst einen Fokusdrift-Sensor, der die Position der die Abbildungsoptik bildenden Teile erfasst, und einen Temperatursensor, der die Temperatur verschiedener Bereiche der Abbildungsoptik erfasst. Mittels anhand Computersimulation bestimmter Werte für die Fokusdrift wird dann die Fokalebene in Abhängigkeit der Werte des Fokusdrift-Sensors und des Temperatursensors nachgeführt.

Aus der DE 195 02 045 ist eine Fokalebene mit CCD-Zeilen einer Luftbildkamera bekannt, die mittels eines piezoelektrischen Stellelementes senkrecht zur optischen Achse bewegbar ist. Dadurch sollen Bildverwaschungen bzw. Bewegungsunschärfen kompensiert werden, die durch die Flugvorwärtsbewegung und somit der relativen Bewegung der Kamera zum erfassten Gelände während der Belichtung hervorgerufen werden.

Auch die EP 1 570 314 B1 und die US 3,744,387 beschreiben Luftbildkameras mit einer Kompensation der Flugvorwärtsbewegung durch Stellelemente, die eine entsprechende Nachführung des Sensors bzw. des Films bewirken.

Andere bekannte Ansätze um eine Bildverwaschung in Aufnahme von relativ zur Kamera bewegten Objekten zu reduzieren, zielen auf das Verkürzen der Belichtungszeiten ab.

So ist bekannt, dass z.B. bei Verwendung eines Schlitzblendenverschlusses geringere Belichtungszeiten - verglichen mit erforderlichen Belichtungszeiten bei einem zentralen, globalen Blendenverschluss - erreichbar sind.

Bei einem Schlitzblendenverschluss werden zwei Blendenelemente eingesetzt, die auch als Vorhänge bezeichnet werden. In Grundstellung, in der keine Belichtung erfolgt, ist ein erster der beiden Vorhänge geschlossen, sodass dieser den Sensor komplett verdeckt, wohingegen der zweite Vorhang offen ist und den Sensor nicht verdeckt. Zur Bildaufnahme öffnet sich der erste Vorhang und bewegt sich üblicher Weise mit konstanter Geschwindigkeit über das Bild. Sobald für die durch das Öffnen des ersten Vorhangs zuerst freigegebene Sensor-Linie die gewünschte Belichtungszeit erreicht ist, beginnt der zweite Vorhang sich zu schliessen und sich mit z.B. konstanter Geschwindigkeit - und in derselben Richtung wie der erste Vorhang - über das Bild zu bewegen. Dadurch rollt oder läuft eine Schlitzblende quasi über das Bild.

Die Folge dieser Blendenverschlussart ist, dass einzelne Stellen des Flächensensors (d.h. die jeweils zeitlich nacheinander zur Belichtung freigegebenen und wieder verdeckten Sensor-Linien) zu unterschiedlichen Zeitpunkten belichtet werden. Dadurch weisen die jeweiligen Sensor-Linien unterschiedliche mittlere Belichtungszeitpunkte auf.

Die Belichtungsdauer der einzelnen Sensor-Linien kann dadurch - verglichen mit der Belichtungsdauer bei zentralen Blenden - merklich verkürzt werden. Zwar kann somit eine Bildverwaschung bzw. Bewegungsunschärfe in Aufnahmen von relativ zur Kamera bewegten Objekten verringert werden. Da sich jedoch das projizierte Bild bei Luftbildaufnahmen durch die Flugvorwärtsbewegung relativ zum Sensor und relativ, insbesondere parallel, zum Vorhang der Schlitzblende bewegt, ist - bedingt durch die unterschiedlichen Belichtungszeitpunkte der einzelnen Sensor-Linien - das durch den Sensor erfasste Luftbild des Geländes entweder gestaucht, d.h. zusammen gequetscht, oder gestreckt, d.h. in die Länge gezogen; je nach dem, ob sich die Schlitzblende in Gleich- oder in Gegenrichtung des projizierten Bildes über den Flächensensor verschiebt.

In der WO 2007/08159 wird ein Bildaufnahmeverfahren - z.B. für die Sportphotographie - unter Verwendung eines Schlitzblendenverschlusses beschrieben, wobei aus zwei nacheinander erfassten Aufnahmen die Verschiebung eines sich bewegenden Objekts ermittelt wird. Abhängig von dieser Verschiebung sowie von den unterschiedlichen Belichtungszeitpunkten der einzelnen Sensorzeilen wird ein korrigiertes Bild - durch entsprechendes Modifizieren eines der beiden erfassten Aufnahmen - gebildet.

Allerdings kommt es bei Luftbildaufnahmen vor, dass die Driftgeschwindigkeit des projizierten Bilds relativ zum Sensor während einer Aufnahme nicht konstant bleibt, da die Driftgeschwindigkeit u.a. von der Fluggeschwindigkeit und der Flughöhe über dem zu erfassenden Gelände abhängt. Dies kann zu unerwünschten Verzerrungen in der Luftbildaufnahme führen.

Eine Aufgabe der Erfindung ist daher das Bereitstellen eines verbesserten Verfahrens zum Korrigieren einer durch eine Flugvorwärtsbewegung verursachten Verzerrung in einer Luftbildaufnahme, die mit einer Schlitzblendenverschluss-Luftbildkamera von einem Flugobjekt aus aufgenommen wird, sowie eines verbesserten Luftbildkamera-Systems dafür.

Insbesondere soll dabei eine verbesserte Kompensation jener Verzerrungen ermöglicht werden, die bedingt sind durch die - aufgrund des Schlitzblendenverschluss gegebenen - unterschiedlichen Belichtungszeitpunkte der jeweiligen Sensor-Linien.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein Verfahren zum Korrigieren einer durch eine Flugvorwärtsbewegung verursachten Verzerrung in einer Luftbildaufnahme, die mit einer Luftbildkamera von einem Flugobjekt aus aufgenommen wird.

Die Luftbildaufnahme wird durch einen eine Vielzahl von photosensitiven Pixeln aufweisenden Flächensensor der Luftbildkamera erfasst. Erfindungsgemäss kommt dabei ein Schlitzblendenverschluss zum Einsatz, wobei sich die Schlitzblende mit bekannter, insbesondere konstanter, Geschwindigkeit über den Flächensensor und über ein projiziertes Bild verschiebt. Dadurch werden die einzelnen - sich entlang der Schlitzblendenöffnung erstreckenden - Sensor-Linien des Flächensensors jeweils zu unterschiedlichen, aufeinander folgenden Belichtungszeitpunkten belichtet, sodass durch die Sensor-Linien jeweils ein Bild eines Geländestreifens zu den unterschiedlichen Belichtungszeitpunkten erfasst wird.

Wie eingangs bereits erwähnt, driftet bei Luftbildaufnahmen das projizierte Bild eines Geländeabschnitts relativ zum Flächensensor durch die Flugvorwärtsbewegung des Flugobjekts.

Die entsprechende Driftgeschwindigkeit des Bildes gegenüber dem Flächensensor hängt dabei u.a. von der Fluggeschwindigkeit und dem Abbildungsmassstab ab, wobei sich der Abbildungsmassstab aus der Brennweite und der relativen Flughöhe über dem erfassten Gelände bestimmt. Weist beispielsweise das im Rahmen einer Luftbildaufnahme erfasste Gelände ein variierendes Höhenprofil auf, so ist auch die Driftgeschwindigkeit verschiedener Bereiche des projizierten Bilds relativ zum Flächensensor unterschiedlich hoch.

Erfindungsgemäss wird daher den einzelnen Sensor-Linien jeweils eine, insbesondere zum Belichtungszeitpunkt aktuelle, relative Flughöhe über dem durch die jeweilige Sensor-Linie erfassten Geländestreifen zugeordnet.

Abhängig von der jeweils zugeordneten relativen Flughöhe wird nun für die einzelnen Sensor-Linien separat jeweils ein Vorwärtsbewegungs-Kompensationsfaktor bestimmt und die Verzerrung in der Luftbildaufnahme linienweise anhand des jeweiligen Kompensationsfaktors korrigiert.

Als der Belichtungszeitpunkt der einzelnen Sensor-Linien kann dabei jeweils beispielsweise ein mittlerer Zeitpunkt während der jeweiligen Belichtungszeit der einzelnen Sensor-Linien angenommen werden, sodass ein konkreter Belichtungszeitpunkt der jeweiligen Sensor-Linien abhängig vom Belichtungsbeginn und/oder vom Belichtungs-Endzeitpunkt fiktiv definiert werden kann.

In einem Beispiel können die Sensor-Linien mit den Zeilen des Flächensensors übereinstimmen, nämlich im Fall, dass die Vorhänge der Schlitzblende - und somit auch der Schlitz - parallel zu den Sensor-Zeilen ausgerichtet sind. In Alternativ können jedoch die Vorhänge auch schräg bzw. verdreht zu den Sensor-Zeilen angeordnet sein. In diesen Fällen werden als die Sensor-Linien jeweils jene Pixel des Flächensensors zusammengefasst, die entlang des Schlitzes verlaufender, fiktiver Linien ausgerichtet sind. Die Pixel, die in einem solchen Fall jeweils zu einer Sensor-Linie zusammengefasst werden, können beispielsweise anhand Interpolation bestimmt werden.

Gemäss einer Ausführungsform der Erfindung können die den Sensor-Linien jeweils zugeordneten relativen Flughöhen über den erfassten Geländestreifen unter Berücksichtigung eines bekannten digitalen 3D-Modells des überflogenen Geländes bestimmt werden.

Ein solches 3D-Geländemodell kann dabei entweder bereits bekannt und abrufbereit in einem Speicher abgelegt sein, und/oder erst während des Fluges erfasst und erstellt werden. Beispielsweise kann dafür das Gelände anhand eines Laserscanners - insbesondere zeitlich parallel zum Erfassen der Luftbildaufnahmen - vermessen und daraus das digitale 3D-Modell erstellt werden, wobei z.B. der Erfassungsbereich des Laserscanners dem Erfassungsbereich der Luftbildkamera in Flugrichtung vorgeordnet ist.

Wie bereits bekannt, wird der jeweilige Kompensationsfaktor insbesondere abhängig von Messdaten eines im Flugobjekt mitgeführten Satellitennavigationssystems (wie Fluggeschwindigkeit, Position, absolute Flughöhe des Flugobjekts, etc.) und abhängig von Messdaten einer Inertialsensoreneinheit "IMU" (wie Gier-, Längsneigungs- und Querneigungswinkel des Flugobjekts) bestimmt.

Zudem wird vorzugsweise zur Ableitung des Kompensationsfaktors auch die Brennweite der Luftbildkamera miteinbezogen, da die Driftgeschwindigkeit des Bildes relativ zum Flächensensor sowohl von der relativen Flughöhe - die erfindungsgemäss linienweise zur Verzerrungskompensation berücksichtigt wird - als auch von der Brennweite abhängt.

Diese weiteren Eingangsdaten (GPS, IMU, Brennweite), von welchen die jeweiligen Kompensationsfaktoren ebenso abhängen, können beispielsweise jeweils für alle oder einige Sensor-Linien gemeinsam berüchsichtigt werden (insbesondere im Fall, dass sich das Flugobjekt über die Gesamtbelichtungszeit des Flächensensors hinweg verhältnismässig konstant fortbewegt und sich die Brennweite nicht ändert, sodass sich diese Eingangsdaten nicht wesentlich ändern). Alternativ können diese Eingangsdaten jedoch auch - wie erfindungsgemäss die relative Flughöhe - für die einzelnen Linien-Sensoren zu den jeweiligen Belichtungszeitpunkten aktuell erfasst und beim Bestimmen des jeweiligen Kompensationsfaktors berücksichtigt werden.

D.h., dass entweder z.B. für alle Kompensationsfaktoren der einzelnen Sensor-Linien eine gemeinsame Fluggeschwindigkeit, eine gemeinsame Brennweite der Kamera, etc. angenommen werden kann, oder aber diese jeweils für die Sensor-Linien einzeln zu den jeweiligen Belichtungszeitpunkten erfasst und - zur Ableitung der Kompensationsfaktoren - den Sensor-Linien zugeordnet werden.

Des Weiteren betrifft die Erfindung ein Verfahren zum mit einer Luftbildkamera von einem Flugobjekt aus erfolgenden Aufnehmen eines Luftbilds von einem überflogenen Gelände unter Verwendung eines Schlitzblendenverschlusses, wobei eine durch eine Flugvorwärtsbewegung des Flugobjekts verursachte Verzerrung im aufgenommenen Luftbild anhand des oben beschriebenen erfindungsgemässen Kompensations-Verfahrens korrigiert wird.

Das erfindungsgemässe Luftbildkamera-System zur von einem Flugobjekt aus erfolgenden Aufnahme von Luftbildern eines überflogenen Geländes weist ein Objektiv, einen - eine Vielzahl von photosensitiven Pixel aufweisenden - Flächensensor, einen sich über ein projiziertes Bild verschiebbaren Schlitzblendenverschluss zur Belichtung von einzelnen Sensor-Linien, insbesondere Zeilen, des Flächensensors zu jeweils unterschiedlichen, aufeinander folgenden Belichtungszeitpunkten, sodass die Sensor-Linien jeweils einen Geländestreifen des überflogenen Geländes zu den unterschiedlichen Belichtungszeitpunkten erfassen, und eine elektronischen Datenverarbeitungseinheit auf. Die Datenverarbeitungseinheit ist dabei zur Durchführung zumindest folgender Schritte des oben beschriebenen erfindungsgemässen Kompensations-Verfahrens ausgebildet:
- Zuordnen von jeweils einer, insbesondere zum Belichtungszeitpunkt aktuellen, relativen Flughöhe über dem durch die jeweilige Sensor-Linie erfassten Geländestreifen zu den einzelnen Sensor-Linien, und
- Bestimmen jeweils eines Kompensationsfaktors separat für jede Sensor-Linie, der von einer Fluggeschwindigkeit des Flugobjekts, einer Brennweite der Luftbildkamera sowie der der jeweiligen Sensor-Linie zugeordneten relativen Flughöhe abhängt, und
- linienweises Korrigieren einer durch eine Flugvorwärtsbewegung verursachten Verzerrung in der Luftbildaufnahme anhand des jeweiligen Kompensationsfaktors.

Insbesondere kann dabei ein Speicher für ein digitales 3D-Modell des überflogenen Geländes vorgesehen sein, sodass die Datenverarbeitungseinheit aus der Kenntnis des gespeicherten digitalen 3D-Modells jeweils linienweise die relativen Flughöhen über den anhand der Sensor-Linien erfassten Geländestreifen ableiten kann.

Gemäss einer Ausführungsform kann zusätzlich ein Laserscanner zur Vermessung des Geländes vorhanden sein, wobei der Erfassungsbereich des Laserscanners derart ausgerichtet sein kann, dass dieser dem Erfassungsbereich der Luftbildkamera in Flugrichtung vorgeordnet ist. Dadurch wird ermöglicht, dass während eines Fluges sowohl das digitale 3D-Modell abgeleitet als auch die Luftbilder aufgenommen und linienweise - abhängig von der jeweiligen relativen Flughöhe - kompensiert werden können.

Des Weiteren bezieht sich die Erfindung auf ein Computerprogrammprodukt, das auf einem maschinenlesbaren Träger gespeichert ist, oder ein Computer-Daten-Signal, verkörpert durch eine elektromagnetische Welle, mit Programmcode zur Durchführung zumindest folgender Schritte des oben beschriebenen erfindungsgemässen Kompensations-Verfahrens:
- Zuordnen von jeweils einer, insbesondere zum Belichtungszeitpunkt aktuellen, relativen Flughöhe über dem durch die jeweilige Sensor-Linie erfassten Geländestreifen zu den einzelnen Sensor-Linien, und
- Bestimmen jeweils eines Kompensationsfaktors separat für jede Sensor-Linie, der von einer Fluggeschwindigkeit des Flugobjekts, einer Brennweite der Luftbildkamera sowie der der jeweiligen Sensor-Linie zugeordneten relativen Flughöhe abhängt, und
- linienweises Korrigieren einer durch eine Flugvorwärtsbewegung verursachten Verzerrung in der Luftbildaufnahme anhand des jeweiligen Kompensationsfaktors.

Das erfindungsgemässe Verfahren und die erfindungsgemässe Vorrichtung werden nachfolgend anhand von in den Zeichnungen schematisch dargestellten Figuren und konkreten Ausführungsbeispielen rein beispielhaft näher beschrieben, wobei auch auf weitere Vorteile der Erfindung eingegangen wird. Im Einzelnen zeigen:
- Fig.1: einen Flächensensor 4, dessen Sensor-Linien 6 anhand eines Schlitzblendenverschlusses 7 jeweils zu unterschiedlichen Zeitpunkten belichtet werden;
- Fig.2: einen Gesamterfassungsbereich 12 einer von einem Flugzeug getragenen Luftbildkamera 2 sowie einen zu einem konkreten Belichtungszeitpunkt - aufgrund der Stellung des Schlitzverschlusses - erfassten Geländestreifen 9;
- Fig.3: eine Luftbildkamera 2 - die sich relativ zum überflogenen Gelände 8 vorwärts bewegt - während einer Luftbildaufnahme 1;
- Fig.4: ein Flugzeug mit einer Luftbildkamera 2, wobei eine Luftbildaufnahme 1 von einem verschiedene Profilhöhen aufweisenden Gelände erfasst wird;
- Fig.5: die aus Figur 4 erfasste Luftbildaufnahme 1, einmal korrigiert mittels eines konstanten Kompensationsfaktors und einmal korrigiert anhand des erfindungsgemässen Verfahrens mit für jede Sensor-Linie jeweils separat ermitteltem Kompensationsfaktor;
- Fig.6: ein Flächensensor 4, wobei anhand eines schräg ausgerichteten Schlitzblendenverschlusses 7 jeweils schräg verlaufende Sensor-Linien 6 zu unterschiedlichen Zeitpunkten belichtet werden;
- Fig.7: ein erfindungsgemässes Luftbildkamera-System; und
- Fig.8: ein erfindungsgemässes Vermessungsgerät mit weiter Pupillenöffnung des Okulars im Vergleich zu einem Vermessungsgerät des Standes der Technik mit Direktsichtkanal und geringer Pupillenöffnung des Okulars.

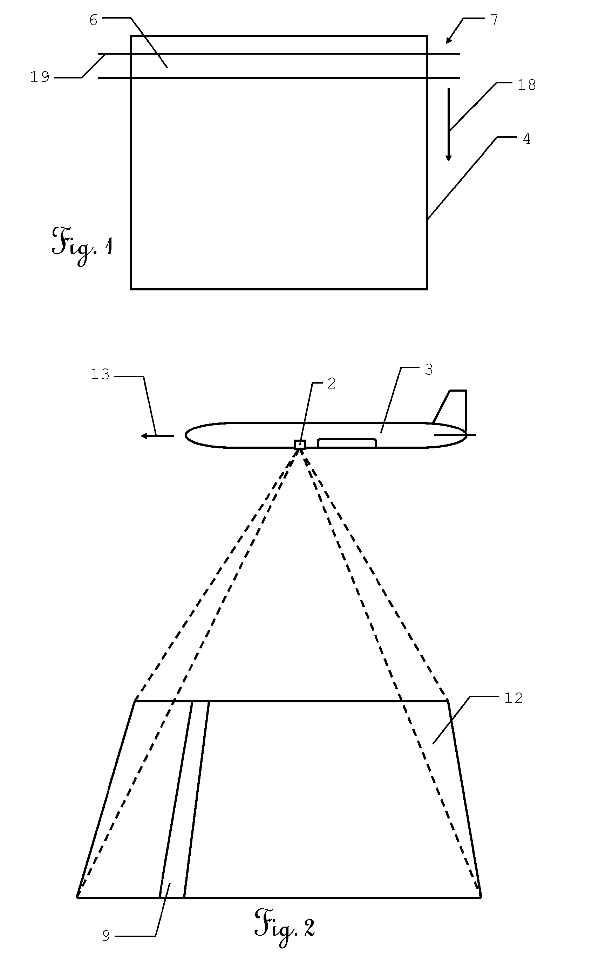

Figur 1 zeigt einen Flächensensor 4, dessen Sensor-Linien 6 anhand eines Schlitzblendenverschlusses 7 jeweils zu unterschiedlichen Zeitpunkten belichtet werden.

Bei dem - im Rahmen des erfindungsgemässen Verfahrens und Systems zur Anwendung kommenden - Schlitzblendenverschluss 7 werden zwei Blendenelemente eingesetzt, die auch als Vorhänge bezeichnet werden. In Grundstellung, in der keine Belichtung erfolgt, ist ein erster der beiden Vorhänge geschlossen, sodass dieser den Sensor komplett verdeckt, wohingegen der zweite Vorhang 23 offen ist und den Sensor nicht verdeckt. Zur Bildaufnahme öffnet sich der erste Vorhang 22 und bewegt sich mit bekannter Geschwindigkeit über das Bild. Sobald für die durch das Öffnen des ersten Vorhangs 22 zuerst freigegebene Sensor-Linie die gewünschte Belichtungszeit erreicht ist, beginnt der zweite Vorhang 23 sich zu schliessen und sich mit z.B. konstanter Geschwindigkeit - und in derselben Richtung wie der erste Vorhang 22 - über das Bild zu bewegen. Dadurch rollt oder läuft eine Schlitzblende quasi über das Bild.

Die Folge dieser Blendenverschlussart ist, dass einzelne Stellen des Flächensensors 4 (d.h. die jeweils zeitlich nacheinander zur Belichtung freigegebenen und wieder verdeckten Sensor-Linien 6) zu unterschiedlichen Zeitpunkten belichtet werden. Dadurch weisen die jeweiligen Sensor-Linien 6 unterschiedliche mittlere Belichtungszeitpunkte auf.

Die Belichtungsdauer der einzelnen Sensor-Linien 6 kann dadurch - verglichen mit der Belichtungsdauer bei zentralen Blenden - merklich verkürzt werden. Zwar kann somit eine Bildverwaschung bzw. Bewegungsunschärfe in Aufnahmen von relativ zur Kamera bewegten Objekten verringert werden. Da sich jedoch das projizierte Bild bei Luftbildaufnahmen 1 durch die Flugvorwärtsbewegung relativ zum Sensor und relativ zum Vorhang der Schlitzblende bewegt, ist - bedingt durch die unterschiedlichen Belichtungszeitpunkte der einzelnen Sensor-Linien 6 - das durch den Sensor erfasste Luftbild des Geländes entweder gestaucht, d.h. zusammen gequetscht, oder gestreckt, d.h. in die Länge gezogen; je nach dem, ob sich die Schlitzblende in Gleich- oder in Gegenrichtung des projizierten Bildes über den Flächensensor 4 verschiebt.

Figur 2 zeigt ein Flugobjekt 3, das eine Luftbildkamera 2 mit einem Schlitzblendenverschluss 7 trägt.

Während der Belichtungszeit bzw. Integrationszeit für z.B. ein im Gesamterfassungsbereich 12 der Luftbildkamera 2 liegendes Planquadrat auf der Erdoberfläche ergibt sich - durch die Flugvorwärtsbewegung - eine Verschiebung des aufzunehmenden Planquadrates bezüglich der im fliegenden Objekt angeordneten Luftbildkamera 2.

Zu einem bestimmten Zeitpunkt während der Gesamtbelichtungszeit des Flächensensors 4 der Luftbildkamera 2 werden - abhängig von der momentanen Stellung der Vorhänge des Schlitzblendenverschlusses 7 - jeweils nur eine oder einige wenige Sensor-Linien 6 des Flächensensors 4 belichtet, die jeweils nur einen im Planquadrat liegenden sehr schmalen Geländestreifen 9 erfassen. Die einzelnen Sensor-Linien 6 werden somit jeweils zu unterschiedlichen mittleren Belichtungszeitpunkten belichtet.

Aus diesem Grund - nämlich da durch den Schlitzblendenverschluss 7 die Sensor-Linien 6 des Flächensensors 4 jeweils nacheinander belichtet werden - werden auch die einzelnen Geländestreifen 9 des im Gesamterfassungsbereich 12 liegenden Gelände-Planquadrats nacheinander, zu unterschiedlichen Zeitpunkten erfasst. Dabei verschiebt sich - durch die Flugvorwärtsbewegung - das projizierte Bild des Gelände-Planquadrats während der Gesamtbelichtungszeit relativ zum Flächensensor 4.

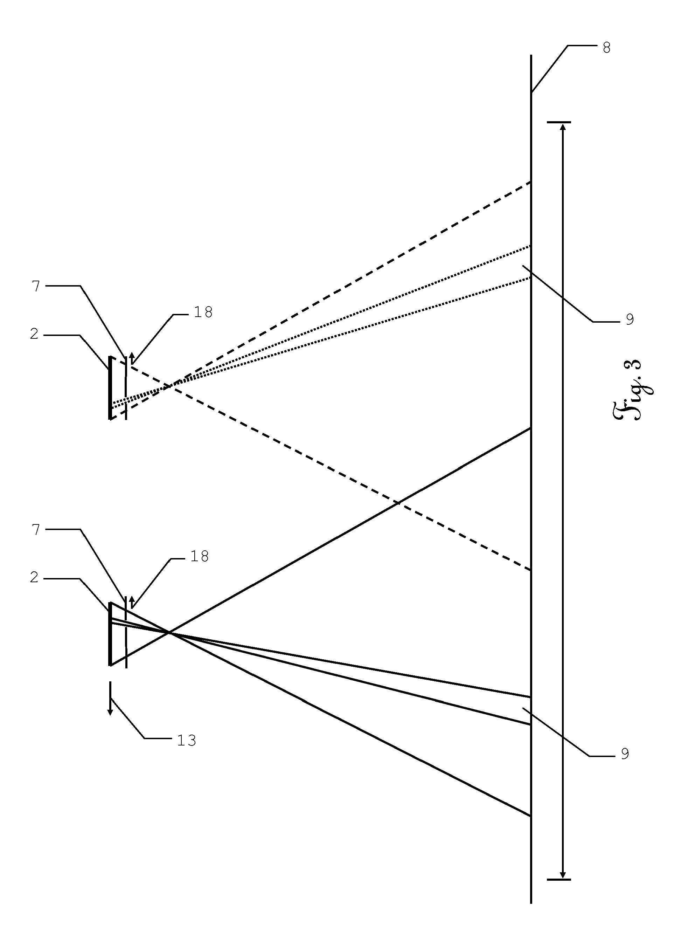

Figur 3 zeigt einen Vorgang zum Aufnehmen eines Luftbildes beispielhaft zu zwei konkreten Zeitpunkten während der Gesamtbelichtungszeit. Die Luftbildkamera 2 weist einen Schlitzblendenverschluss 7 auf, sodass zur Belichtung des Flächensensors 4 ein Schlitz über das projizierte Bild rollt.

Zu einem ersten Zeitpunkt befindet sich das Flugobjekt 3 in einer ersten Flugposition und im Gesamterfassungsbereich 12 der Luftbildkamera 2 liegt ein erstes Planquadrat (oder eine erste Rechtecksfläche) des überflogenen Geländes 8. Der Schlitz des Blendenverschlusses gibt zu diesem Zeitpunkt nur wenige Sensor-Linien 6 frei, wobei anhand der Sensor-Linien 6 jeweils nur ein schmaler Geländestreifen 9 des im Gesamterfassungsbereich 12 liegenden Geländes erfasst wird.

Zu einem zweiten, späteren Zeitpunkt befindet sich das Flugobjekt 3 - durch die Flugvorwärtsbewegung - bereits in einer zweiten Position, sodass nun eine - gegenüber der ersten Rechtecksfläche - in Flugrichtung 13 verschobene zweite Rechtecksfläche des überflogenen Geländes 8 im Gesamterfassungsbereich 12 der Kamera liegt. Auch der Schlitz, der zur Bildaufnahme über den Flächensensor 4 rollt, ist inzwischen in einer zweiten Position, sodass weitere, jedoch wiederum nur wenige Sensor-Linien 6 des Flächensensors 4 zu diesem Zeitpunkt zur Belichtung freigegeben sind und einen schmalen Geländestreifen 9 erfassen.

Im gezeigten Fall rollt der Schlitz entgegen der Flugrichtung 13 über den Flächensensor 4. Somit wird im Rahmen einer Luftbildaufnahme 1 (d.h. durch das Rollen der Schlitzblende über das gesamte Bild und nacheinander erfolgende Belichten die einzelnen Sensor-Linien 6) letztendlich ein Bereich des überflogenen Geländes 8 erfasst, der in Flugrichtung 13 eine über den eigentlichen Erfassungsbereich 12 der Luftbildkamera 2 hinausgehende Ausdehnung aufweist. Jedoch wird dieser grössere, tatsächlich erfasste Bereich des Geländes zusammengequetscht aufgenommen.

Die gestauchte Aufnahme kann nun anhand eines Kompensationsfaktors entzerrt werden, der insbesondere von der Flughöhe über dem Gelände, der Fluggeschwindigkeit, den Belichtungszeitpunkten der einzelnen Sensor-Linien 6 (die sich durch die Rollgeschwindigkeit und Rollrichtung 18 der Schlitzblende ergeben) sowie der Brennweite der Luftbildkamera 2 abhängt.

Das ganzheitliche Korrigieren der Luftbildaufnahme 1 anhand eines einzigen solchen Kompensationsfaktors funktioniert im Allgemeinen akzeptabel, solange das überflogene und erfasste Gelände eben ist - und daher die Flughöhe über den jeweils nacheinander erfassten Geländestreifen 9 während der Luftbildaufnahme 1 als im Wesentlichen konstant angenommen werden kann - sowie solange sich die Fluggeschwindigkeit, Brennweite, etc. während der Gesamtbelichtungsdauer des Flächensensors 4 nicht wesentlich ändern.

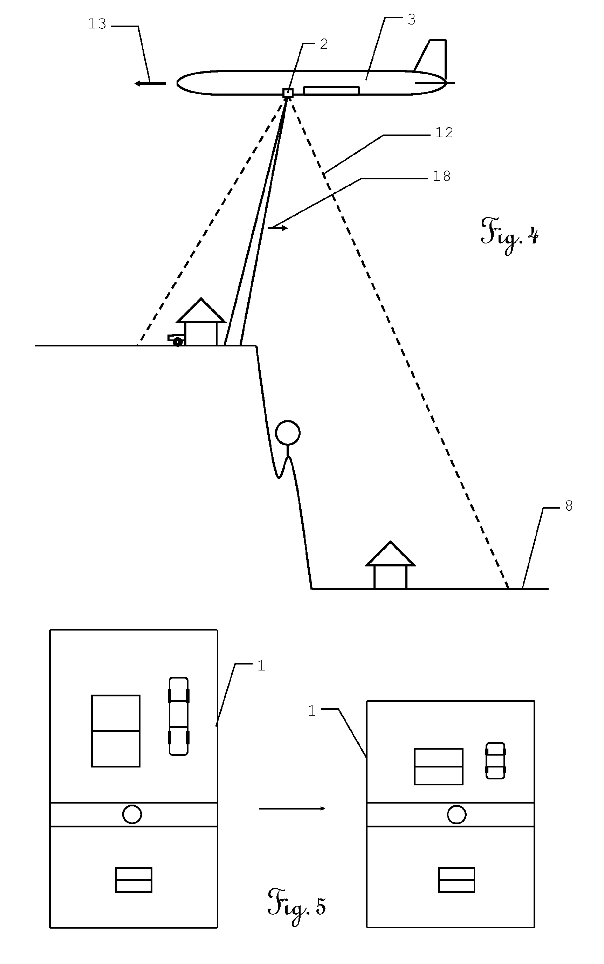

Der Schlitzblendenverschluss 7 der Luftbildkamera 2 aus Figur 4 rollt in Flugrichtung 13 (und auch in jener Richtung, in welcher das projizierte Bild relativ zum Flächensensor 4 driftet) über den Flächensensor 4. Daher weist ein aufgenommenes Luftbild in diesem Fall eine Dehnung des erfassten Geländes als die durch die Flugvorwärtsbewegung verursachte Verzerrung auf.

Wie in Figur 4 zudem ersichtlich, hat das überflogene Gelände 8 ein variierendes Höhenprofil, sodass auch die relative Flughöhe über den nacheinander anhand der einzelnen Sensor-Zeilen erfassten Geländestreifen 9 stark variiert. Daher ist auch die Driftgeschwindigkeit verschiedener Bereiche des projizierten Bilds relativ zum Flächensensor 4 und relativ zur Schlitzblende unterschiedlich hoch.

Wird ein dabei aufgenommenes Luftbild des überflogenen Geländes 8 nun anhand eines einzigen, für den gesamten Flächensensor 4 zur Anwendung kommenden Kompensationsfaktors korrigiert (wobei zur Ableitung des Kompensationsfaktor z.B. die relative Flughöhe über dem tiefer gelegenen Haus des Geländes berücksichtigt wird), so ergibt sich daraus die in Figur 5 linksseitig dargestellte Luftbildaufnahme 1. Der untere Bereich dieser korrigierten Luftbildaufnahme 1, für welchen die relative Flughöhe über dem tiefer gelegenen Haus berücksichtigt wurde, konnte dadurch akzeptabel entzerrt werden, sodass das untere Haus im Wesentlichen wahrheitsgetreu dargestellt ist. Da sich jedoch die Driftgeschwindigkeit des auf die Sensor-Linien 6 projizierten Bildes des höher gelegenen Hauses - aufgrund der geringeren relativen Flughöhe - während der Aufnahme höher war, wird dieser Bereich in der Luftbildaufnahme 1 - trotz Korrektur anhand des einheitlich für den gesamten Flächensensor 4 zur Anwendung kommenden Kompensationsfaktors - gestreckt bzw. gedehnt wiedergegeben.

Erfindungsgemäss wird nun den einzelnen Sensor-Linien 6 jeweils eine, insbesondere zum Belichtungszeitpunkt aktuelle, relative Flughöhe über dem durch die jeweilige Sensor-Linie erfassten Geländestreifen 9 zugeordnet. Abhängig von der jeweils zugeordneten relativen Flughöhe wird nun für die einzelnen Sensor-Linien 6 separat jeweils ein Vorwärtsbewegungs-Kompensationsfaktor bestimmt und die Verzerrung in der Luftbildaufnahme 1 linienweise anhand des jeweiligen Kompensationsfaktors korrigiert.

Durch das erfindungsgemäss linienweise (oder insbesondere zeilenweise) erfolgende Kompensieren der durch die Flugvorwärtsbewegung bedingten Drift des projizierten Bildes können nun auch - zeitlich oder bereichsweise - variierende Driftgeschwindigkeiten bei der Verzerrungskorrektur berücksichtigt werden.

Die rechtsseitige Darstellung in Figur 5 zeigt aufgenommenes Luftbild des in überflogenen Geländes 8 aus Figur 4, wobei das Luftbild anhand des erfindungsgemässen Verfahrens linienweise - d.h. abhängig von der jeweiligen relativen Flughöhe über den durch die einzelnen Sensor-Linien 6 zu unterschiedlichen Belichtungszeitpunkten erfassten Geländestreifen 9 - korrigiert wurde. Für jede Sensor-Linie wird separat ein Kompensationsfaktor abgeleitet. Da der Kompensationsfaktor abhängt von der jeweiligen relativen Flughöhe sowie insbesondere von jeweils zum Belichtungszeitpunkt der Sensor-Linien 6 aktuellen Fluggeschwindigkeiten, Brennweite, IMU-Messdaten, etc. können erfindungsgemäss für die Verzerrungskompensation auch unebene Geländeprofile und sich während der Gesamtbelichtungszeit ändernde Fluggeschwindigkeiten, Brennweite, Flugzeugschwankungen, etc. berücksichtigt werden.

Als der Belichtungszeitpunkt der einzelnen Sensor-Linien 6 kann dabei jeweils beispielsweise ein mittlerer Zeitpunkt während der jeweiligen Belichtungszeit der einzelnen Sensor-Linien 6 angenommen werden, sodass ein konkreter Belichtungszeitpunkt der jeweiligen Sensor-Linien 6 abhängig vom Belichtungsbeginn und/oder vom Belichtungs-Endzeitpunkt fiktiv definiert werden kann.

Weist das überflogene Gelände 8 dabei entlang der anhand der Sensor-Linien 6 nacheinander, einzeln erfassten Geländestreifen 9 ebenso ein variierendes Höhenprofil auf, so kann als die relative Flughöhe über dem jeweiligen Geländestreifen 9 z.B. eine mittlere Höhe über dem Geländestreifen 9 abgeleitet und für das Bestimmen des jeweiligen Kompensationsfaktors herangezogen werden.

Wie aus der rechtsseitig dargestellten Luftbildaufnahme 1 in Figur 5 ersichtlich, kann in der anhand des erfindungsgemässen Verfahrens kompensierten Luftbildaufnahme 1 nun auch das höher gelegene Haus und das nebenstehende Auto wahrheitsgetreu wiedergegeben werden.

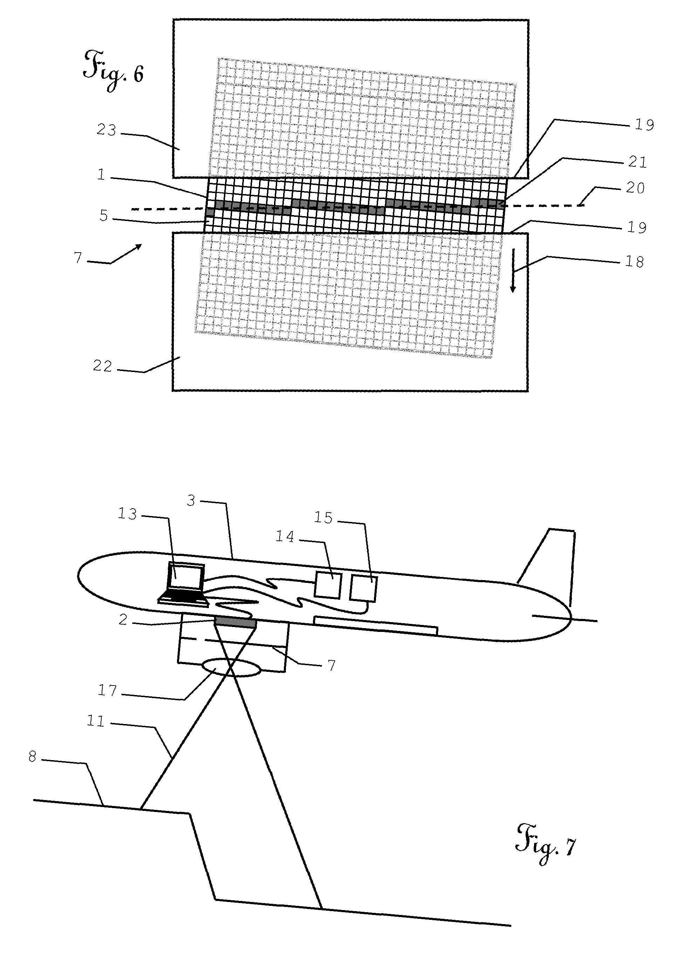

Wie in Figur 6 dargestellt, können die Vorhänge auch gedreht (d.h. schräg) zum Flächensensor 4 ausgerichtet sein und/oder schräg über den Flächensensor 4 rollen.

Dies kann nützlich sein, falls die Anordnungsachse des Flächensensors 4 nicht exakt mit der Flugrichtung 13 übereinstimmt, beispielsweise aufgrund eines durch Seitenwind bedingten Hundegangs des Flugobjekts 3 oder da der Flächensensor nicht exakt relativ zur Längsachse des Flugobjekts 3 ausgerichtet ist.

Jene Pixel 5, die aufgrund der Ausrichtung des Schlitzes gegenüber dem Flächensensor 4 jeweils einen im Wesentlichen gemeinsamen, gleichen Belichtungszeitpunkt aufweisen, können dann zu einer Sensor-Linie zusammengefasst werden. Die Pixel 5, die in einem solchen Fall jeweils zu einer Sensor-Linie 21 zusammengefasst werden, können beispielsweise anhand Interpolation bestimmt werden.

D.h., die jeweils im Wesentlichen zu gleichen Zeitpunkten belichteten Pixel 5 des Flächensensors 4 liegen dabei entlang fiktiven Linien 20, welche parallel zu den Kanten 19 der Vorhänge des Schlitzblendenverschlusses 7 liegen.

Je nach Auflösung des Flächensensors 4 und erforderlicher Genauigkeit des linienweise erfolgenden Kompensations-verfahrens können erfindungsgemäss auch zwei oder einige wenige Pixelreihen jeweils zu einer Sensor-Linie 21 zusammengefasst werden, die entlang einer fiktiven, parallel zur Erstreckungsrichtung des Schlitzes ausgerichteten Linie 20 liegen. Somit kann also eine Sensor-Linie in Spaltenrichtung auch eine Breite von jeweils z.B. 2, 3 oder 4 Pixeln 5 aufweisen (d.h. einige wenige Pixel 5 in Spaltenrichtung des Flächensensors 4 pro definierter Sensor-Linie).

Die Sensor-Linien 6 können dann z.B. mit ihren jeweiligen - durch die Rollgeschwindigkeit und -richtung 18 der Schlitzblende bedingten - Belichtungszeitpunkten verknüpft und gespeichert werden.

In Figur 7 ist ein erfindungsgemässes Luftbildkamera-System zur von einem Flugobjekt 3 aus erfolgenden Aufnahme von Luftbildern eines überflogenen Geländes 8 gezeigt. Das Luftbildkamera-System weist dabei ein Objektiv 17, einen - eine Vielzahl von photosensitiven Pixel 5 aufweisenden - Flächensensor 4, einen sich über ein projiziertes Bild verschiebbaren Schlitzblendenverschluss 7 zur Belichtung von einzelnen Sensor-Linien 6, insbesondere Zeilen, des Flächensensors 4 zu jeweils unterschiedlichen, aufeinander folgenden Belichtungszeitpunkten, sodass die Sensor-Linien 6 jeweils einen Geländestreifen 9 des überflogenen Geländes 8 zu den unterschiedlichen Belichtungszeitpunkten erfassen, und eine elektronischen Datenverarbeitungseinheit 16 auf. Die Datenverarbeitungseinheit 16 ist dabei zur Durchführung zumindest folgender Schritte des oben beschriebenen erfindungsgemässen Kompensations-Verfahrens ausgebildet:
- Zuordnen von jeweils einer, insbesondere zum Belichtungszeitpunkt aktuellen, relativen Flughöhe über dem durch die jeweilige Sensor-Linie erfassten Geländestreifen 9 zu den einzelnen Sensor-Linien 6, und
- Bestimmen jeweils eines Kompensationsfaktors separat für jede Sensor-Linie, der von einer Fluggeschwindigkeit des Flugobjekts 3, einer Brennweite der Luftbildkamera 2 sowie der der jeweiligen Sensor-Linie zugeordneten relativen Flughöhe abhängt, und
- linienweises Korrigieren einer durch eine Flugvorwärtsbewegung verursachten Verzerrung in der Luftbildaufnahme 1 anhand des jeweiligen Kompensationsfaktors.

Dabei kann der jeweilige Kompensationsfaktor durch die Datenverarbeitungseinheit 16 abhängig von Messdaten eines im Flugobjekt 3 mitgeführten Satellitennavigationssystems 14 sowie insbesondere einer Inertialsensoreneinheit 15 bestimmt werden.

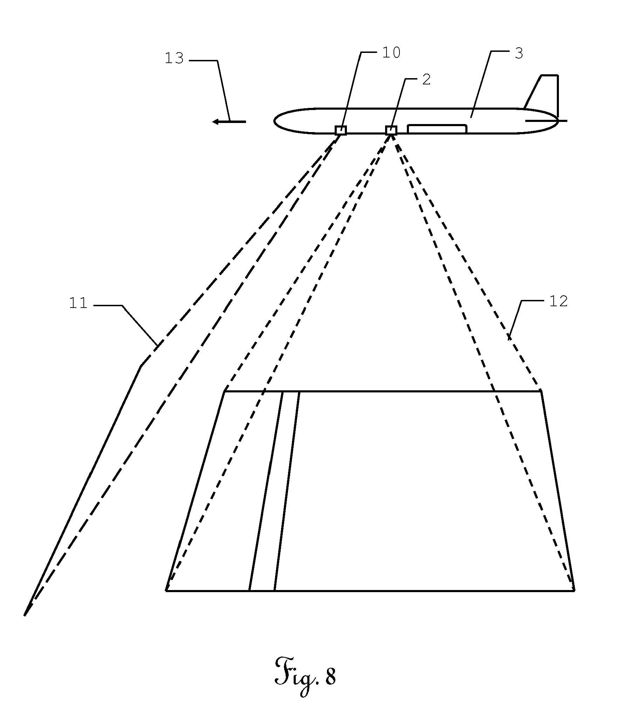

In Figur 8 ist dem Luftbildkamera-System zusätzlich ein Laserscanner 10 ("Airborne LIDAR Sensor") zur Vermessung des Geländes zugeordnet, wobei der Erfassungsbereich 11 des Laserscanners 10 derart ausgerichtet ist, dass dieser dem Erfassungsbereich 12 der Luftbildkamera 2 in Flugrichtung 13 vorgeordnet ist. Dadurch wird ermöglicht, dass während eines Fluges sowohl das digitale 3D-Modell abgeleitet (aus den Messungen des Laserscanners 10) als auch die Luftbilder aufgenommen und linienweise - abhängig von der jeweiligen relativen Flughöhe - kompensiert werden können.

Insbesondere kann dabei ein Speicher für ein digitales 3D-Modell des überflogenen Geländes 8 vorgesehen sein, sodass die Datenverarbeitungseinheit 16 aus der Kenntnis des gespeicherten digitalen 3D-Modells jeweils linienweise die relativen Flughöhen über den anhand der Sensor-Linien erfassten Geländestreifen 9 ableiten kann.

Es versteht sich, dass diese dargestellten Figuren nur mögliche Ausführungsbeispiele schematisch darstellen. Die verschiedenen Ansätze können erfindungsgemäss ebenso miteinander sowie mit Verfahren zum Kompensieren einer durch eine Flugvorwärtsbewegung verursachten Verzerrung und Luftbildkamera-Systemen des Stands der Technik kombiniert werden.

## Patentansprüche

1. Verfahren zum Korrigieren einer durch eine Flugvorwärtsbewegung verursachten Verzerrung in einer Luftbildaufnahme (1), die mit einer Luftbildkamera (2) von einem Flugobjekt (3) aus aufgenommen wird,
• wobei die Luftbildaufnahme (1) durch einen eine Vielzahl von photosensitiven Pixel (5) aufweisenden Flächensensor (4) der Luftbildkamera (2) erfasst wird, dessen Sensor-Linien (6), insbesondere Zeilen, anhand eines sich über ein projiziertes Bild verschiebenden Schlitzblendenverschluss (7) zu unterschiedlichen, aufeinander folgenden Belichtungszeitpunkten belichtet werden, sodass die einzelnen Sensor-Linien (6) jeweils einen Geländestreifen (9) des überflogenen Geländes (8) zu den unterschiedlichen Belichtungszeitpunkten erfassen,
• wobei den einzelnen Sensor-Linien (6) jeweils eine, insbesondere zum Belichtungszeitpunkt aktuelle, relative Flughöhe über dem durch die jeweilige Sensor-Linie erfassten Geländestreifen (9) zugeordnet werden, und
• wobei für die einzelnen Sensor-Linien (6) separat jeweils ein Kompensationsfaktor bestimmt wird, der von einer Fluggeschwindigkeit des Flugobjekts (3), einer Brennweite der Luftbildkamera (2) sowie der der jeweiligen Sensor-Linie zugeordneten relativen Flughöhe abhängt, und die Verzerrung in der Luftbildaufnahme (1) linienweise anhand des jeweiligen Kompensationsfaktors korrigiert wird.

2. Verfahren nach Anspruch 1,
**dadurch gekennzeichnet, dass**
die den Sensor-Linien (6) jeweils zugeordnete relative Flughöhe unter Berücksichtigung eines bekannten digitalen 3D-Modells des überflogenen Geländes (8) bestimmt wird.

3. Verfahren nach Anspruch 2,
**dadurch gekennzeichnet, dass**
das Gelände anhand eines Laserscanners (10) - insbesondere zeitlich parallel zum Erfassen der Luftbildaufnahmen (1) - vermessen und daraus das digitale 3D-Modell erstellt wird, im Speziellen wobei der Erfassungsbereich (11) des Laserscanners (10) dem Erfassungsbereich (12) der Luftbildkamera (2) in Flugrichtung (13) vorgeordnet ist.

4. Verfahren nach einem der Ansprüche 1 bis 3,
**dadurch gekennzeichnet, dass**
der jeweilige Kompensationsfaktor bestimmt wird abhängig von Messdaten eines im Flugobjekt (3) mitgeführten Satellitennavigationssystems (14) sowie insbesondere einer Inertialsensoreneinheit (15).

5. Verfahren nach einem der Ansprüche 1 bis 4,
**dadurch gekennzeichnet, dass**
der Kompensationsfaktor für die Sensor-Linien (6) jeweils abhängig von der zum jeweiligen Belichtungszeitpunkt der Sensor-Linien (6) aktuellen Fluggeschwindigkeit des Flugobjekts (3) bestimmt wird.

6. Verfahren nach einem der Ansprüche 1 bis 5,
**dadurch gekennzeichnet, dass**
der Kompensationsfaktor für die Sensor-Linien (6) jeweils abhängig von einem durch
• die relative Flughöhe und
• die, insbesondere zum jeweiligen Belichtungszeitpunkt aktuelle, Brennweite der Luftbildkamera (2) definierten Abbildungsmassstab des Bildes bestimmt wird.

7. Verfahren nach einem der Ansprüche 1 bis 6,
**dadurch gekennzeichnet, dass**
der Kompensationsfaktor für die Sensor-Linien (6) jeweils bestimmt wird abhängig von
• einem, insbesondere zum jeweiligen Belichtungszeitpunkt aktuellen, Gierwinkel,
• einem, insbesondere zum jeweiligen Belichtungszeitpunkt aktuellen, Längsneigungswinkel und/oder
• einem, insbesondere zum jeweiligen Belichtungszeitpunkt aktuellen, Querneigungswinkel des Flugobjekts (3), die den jeweiligen Sensor-Linien (6) zugeordnet werden.

8. Verfahren zum mit einer Luftbildkamera (2) von einem Flugobjekt (3) aus erfolgenden Aufnehmen eines Luftbilds von einem überflogenen Gelände (8),
• wobei das Luftbild durch einen eine Vielzahl von photosensitiven Pixel (5) aufweisenden Flächensensor (4) der Luftbildkamera (2) erfasst wird, dessen Sensor-Linien (6), insbesondere Zeilen, anhand eines sich über ein projiziertes Bild verschiebenden Schlitzblendenverschlusses (7) zu unterschiedlichen, aufeinander folgenden Belichtungszeitpunkten belichtet werden, sodass die einzelnen Sensor-Linien (6) jeweils einen Geländestreifen (9) des überflogenen Geländes (8) zu den unterschiedlichen Belichtungszeitpunkten erfassen, und
• wobei eine durch eine Flugvorwärtsbewegung des Flugobjekts (3) verursachte Verzerrung im aufgenommenen Luftbild anhand des Verfahrens nach einem der Ansprüche 1 bis 7 korrigiert wird.

9. Luftbildkamera-System zur von einem Flugobjekt (3) aus erfolgenden Aufnahme von Luftbildern eines überflogenen Geländes (8), mit
• einem Objektiv (17),
• einem eine Vielzahl von photosensitiven Pixel (5) aufweisenden Flächensensor (4),
• einem sich über ein projiziertes Bild verschiebbaren Schlitzblendenverschluss (7) zur Belichtung von einzelnen Sensor-Linien (6), insbesondere Zeilen, des Flächensensors (4) zu jeweils unterschiedlichen, aufeinander folgenden Belichtungszeitpunkten, sodass die Sensor-Linien (6) jeweils einen
Geländestreifen (9) des überflogenen Geländes (8) zu den unterschiedlichen Belichtungszeitpunkten erfassen, und
• einer elektronischen Datenverarbeitungseinheit (16) zur Durchführung zumindest folgender Schritte des Verfahrens nach einem der Ansprüche 1 bis 7:
- Zuordnen von jeweils einer, insbesondere zum Belichtungszeitpunkt aktuellen, relativen Flughöhe über dem durch die jeweilige Sensor-Linie erfassten Geländestreifen (9) zu den einzelnen Sensor-Linien (6), und
- Bestimmen jeweils eines Kompensationsfaktors separat für jede Sensor-Linie, der von einer Fluggeschwindigkeit des Flugobjekts (3), einer Brennweite der Luftbildkamera (2) sowie der der jeweiligen Sensor-Linie zugeordneten relativen Flughöhe abhängt, und
- linienweises Korrigieren einer durch eine Flugvorwärtsbewegung verursachten Verzerrung in der Luftbildaufnahme (1) anhand des jeweiligen Kompensationsfaktors.

10. Luftbildkamera-System nach Anspruch 8,
**dadurch gekennzeichnet, dass**
• ein Speicher für ein digitales 3D-Modell des überflogenen Geländes (8) vorgesehen ist und
• die Datenverarbeitungseinheit (16) zur Ableitung der jeweils linienweise zugeordneten relativen Flughöhen aus der Kenntnis des gespeicherten digitalen 3D-Modells ausgebildet ist.

11. Luftbildkamera-System nach Anspruch 9,
**dadurch gekennzeichnet, dass**
• ein Laserscanner (10) zur Vermessung des Geländes vorhanden ist, im Speziellen wobei der Erfassungsbereich (11) des Laserscanners (10) derart ausgerichtet ist, dass dieser dem Erfassungsbereich (12) der Luftbildkamera (2) in Flugrichtung (13) vorgeordnet ist, und
• die elektronische Datenverarbeitungseinheit (16) ausgebildet ist zur Erstellung des digitalen 3D-Modells aus Messdaten des Laserscanners (10) und zur Abspeicherung des 3D-Modells.

12. Computerprogrammprodukt, das auf einem maschinenlesbaren Träger gespeichert ist, oder Computer-Daten-Signal, verkörpert durch eine elektromagnetische Welle, mit Programmcode zur Durchführung zumindest folgender Schritte des Verfahrens nach einem der Ansprüche 1 bis 7:
• Zuordnen (5) von jeweils einer, insbesondere zum Belichtungszeitpunkt aktuellen, relativen Flughöhe über dem durch die jeweilige Sensor-Linie (6) erfassten Geländestreifen (9) zu den einzelnen Sensor-Linien (6), und
• Bestimmen jeweils eines Kompensationsfaktors separat für jede Sensor-Linie, der von einer Fluggeschwindigkeit des Flugobjekts (3), einer Brennweite der Luftbildkamera (2) sowie der der jeweiligen Sensor-Linie zugeordneten relativen Flughöhe abhängt, und
• linienweises Korrigieren einer durch eine Flugvorwärtsbewegung verursachten Verzerrung in der Luftbildaufnahme (1) anhand des jeweiligen Kompensationsfaktors,
insbesondere wenn das Programm in einer elektronischen Datenverarbeitungseinheit (16) ausgeführt wird.
